# EUROPÄISCHE PATENTSCHRIFT

(11) **EP 4 022 133 B1**
(45) Veröffentlichungstag und Bekanntmachung des Hinweises auf die Patenterteilung: **17.12.2025**
(21) Anmeldenummer: 20764976.5
(22) Anmeldetag: 28.08.2020
(51) Int. Cl.: E02D 27/52, E02D 27/42, E02B 17/02, E02B 17/00

(54) **VERFAHREN ZUR TEILWEISEN NEUERSTELLUNG EINES GRÜNDUNGSSYSTEMS FÜR EINE OFFSHORE-WINDENERGIEANLAGE**
METHOD FOR PARTIALLY RE-ESTABLISHING A FOUNDATION SYSTEM FOR AN OFFSHORE WIND TURBINE
PROCÉDÉ DE RÉTABLISSEMENT PARTIEL D'UN SYSTÈME DE FONDATION POUR UNE ÉOLIENNE EN MER

(30) Priorität: 30.08.2019 DE 102019213165
(43) Veröffentlichungstag der Anmeldung: 06.07.2022
(73) Patentinhaber: Fraunhofer-Gesellschaft zur Förderung der angewandten Forschung e.V., 80686 München (DE)
(72) Erfinder: QUIROZ, Tulio, 27572 Bremerhaven (DE); FOGLIA, Aligi, 27572 Bremerhaven (DE); COLLMANN, Mareike, 30419 Hannover (DE)
(74) Vertreter: Pfenning, Meinig & Partner mbB
(86) Internationale Anmeldenummer: PCT/EP2020/074165
(87) Internationale Veröffentlichungsnummer: WO 2021/038093

(56) Entgegenhaltungen:
- EP-A2- 1 457 674
- EP-A2- 1 457 674
- WO-A1-2005/040605
- WO-A1-2005/040605
- WO-A1-2019/074363
- WO-A1-2019/074363
- DE-B3- 102010 012 094
- DE-B3- 102010 012 094
- GB-A- 2 136 860
- GB-A- 2 136 860

## Beschreibung

Die Erfindung liegt auf dem Gebiet des Maschinenbaus und der Bautechnik und ist mit besonderem Vorteil bei der Instandsetzung und beim Repowering von Offshore-Windenergieanlagen einsetzbar.

Seit einigen Jahrzehnten werden im Rahmen der zunehmenden Nutzung regenerativer Energien bei der Energieversorgung zunehmend Windenergieanlagen mit Türmen und an diesen in Gondeln befestigten Windturbinen errichtet. Ein beträchtlicher Teil solcher Windenergieanlagen wird seit einigen Jahren offshore, d. h. im Meer in geringen Wassertiefen, gebaut. Ein großer Teil der Offshore-Windenergieanlagen umfasst sogenannte Monopile-Konstruktionen, bei denen ein Stahlrohr als Einzelpfahlgründung im Meeresboden gegründet wird, wobei das Stahlrohr den Turm der Windturbine trägt.

Während der Betriebsdauer einer solchen Anlage treten hohe ermüdungserzeugende Beanspruchungen durch den Anlagenbetrieb sowie aus Wind- und Wellenbeanspruchungen auf, so dass die tragende Stahlkonstruktion stark beansprucht wird. Hinzu kommt, dass durch den Betrieb der Anlage Kräfte in den Meeresboden eingeleitet werden, die in manchen Fällen die Trageigenschaften des Bodens verändern, so dass die Standsicherheit der Tragstruktur bei einer eventuellen Betriebsdauerverlängerung gefährdet sein kann. Nach Ablauf der geplanten Betriebsphase einer Windenergieanlage kann diese zurückgebaut oder die Betriebsgenehmigung kann für eine bestimmte Dauer verlängert werden. Zudem kann bei einem Offshore-Repowering der Einbau einer Leistungsstärkeren Windenergieanlage durch Ertüchtigung bestehender Trag- und Gründungsstrukturen erfolgen.

Aus DE 10 2010 012094 B3 offenbart ein Verfahren zur teilweisen Neuerstellung eines Gründungssystems für eine Offshore-Windenergieanlage, bei dem in einem ersten Vorbereitungsschritt vor dem ersten Aufbauschritt ein Aufbau einer Windenergieanlage auf einem Einzelpfahl zurückgebaut und bei dem in einem ersten Aufbauschritt auf den im Meeresboden gegründeten Einzelpfahl eine Stützkonstruktion mit wenigstens einer Führungseinrichtung, die in ihrer Axialrichtung auf einen Einzelpfahl aufschiebbar ist, aufgeschoben wird und in einem zweiten Aufbauschritt die Stützkonstruktion am Meeresboden gegründet wird.

Aus EP 1 457 674 A2 ist ein Fundament für eine Offshore-WEA bekannt, wobei ein zentrales Rohr am Standort in den Seegrund eingebracht wird und eine Stützkonstruktion über das zentrale Rohr positioniert und abgesenkt wird. Die Stützbeine werden im Seegrund mit Pfählen verankert und der obere Ring wird mit dem zentralen Rohr formschlüssig verbunden.

Aus WO 2019/074363 A1 ist ein Gründungssystem mit drei oder mehr Saugnäpfen bekannt, die im Meeresboden installiert werden, um als Fundament oder Teil davon zu fungieren, um eine Offshore-Struktur zu stützen, die auf dem Meeresboden ruht, wobei die Saugnäpfe einen Verbindungskörper tragen und der Verbindungskörper so ausgelegt ist, dass er eine Nutzlast trägt. Die WO 2019/074363 A1 bezieht sich auch auf ein Verfahren zur Installation eines Saugeimers, wobei der Boden des Saugeimers in den Meeresboden eindringt und Flüssigkeit aus dem Saugraum entfernt wird, so dass das Eindringen durch Saugen erfolgt.

Aus WO 2005/040605 A1 ist eine Gründung für eine Offshore-Windenergieanlage bekannt, mit einem den Turm der Windenergieanlage mit Gondel und Rotor tragenden Lastverteilungselement und einer Mehrzahl von das Lastverteilungselement tragenden, gegenüber der Vertikalen schräg nach außen verlaufenden Gründungsbeinen, bei der die Mittelachsen der Gründungsbeine die von dem Außendurchmesser des Turms in der Verbindungsebene des Lastverteilungselements mit dem Turm umschriebene Kreisfläche schneiden.

Aus GB 2 136 860 A ist eine Turmstruktur mit einer zentralen Säule, drei Stützbeinen und einer Grundstruktur bekannt, die mit Hilfe von Pfählen im Meeresboden verankert werden kann. Die Beine sind an ihren oberen Enden mit einer Hülse verbunden. Die Grundstruktur umfasst eine zentrale Hülse. Beide Hülsen können während des Baus an der Wasseroberfläche gehalten werden, damit die Säule schwimmend in Position gebracht und dort mit den Hülsen zementvergossen werden kann.

Vor dem Hintergrund des Standes der Technik liegt der vorliegenden Erfindung die Aufgabe zugrunde, ein Gründungssystem für eine Offshore-Windenergieanlage zu schaffen, das besonders tragfähig und langlebig ist und somit eine lange Betriebsdauer der Windenergieanlage erlaubt und das durch Ertüchtigung einer bestehenden Gründungsstruktur einer Windenergieanlage geschaffen werden kann. Unter einem Gründungssystem wird in diesem Zusammenhang der Teil der Windenergieanlage verstanden, der den Turm mit der Gondel trägt. Zum Gründungssystem gehören somit die Gründungselemente am Meeresboden sowie die Tragwerkskonstruktion zwischen diesen Gründungen und dem Turm.

Die Aufgabe wird durch ein Verfahren mit den Merkmalen des Patentanspruchs 1 und durch eine Vorrichtung mit den Merkmalen des Patentanspruchs 4 gelöst. Beispiele, die nicht unter die Ansprüche fallen, können dem Verständnis der Erfindung dienen.

Das erfindungsgemäß geschaffene Gründungssystem entfaltet eine hohe Tragkraft dadurch, dass ein Monopile, d. h. ein einzelnes in einer Pfahlgründung am Meeresboden gegründetes Tragrohr oder kurz Einzelpfahl, mit einer Stützkonstruktion kombiniert wird, die ebenfalls am Meeresboden gegründet wird, wobei die Stützkonstruktion auf den Monopile aufgeschoben wird, so dass der Monopile bei der Herstellung des Gründungssystems als Führung für die Stützkonstruktion dient. Somit kann die relative Position zwischen dem Monopile und der Stützkonstruktion durch die Führung, vor der Gründung der Stützkonstruktion am Meeresboden, sichergestellt werden.

Es ist somit vorgesehen, dass die Stützkonstruktion beim Aufschieben auf den Monopile an diesem mechanisch geführt werden kann. Die Stützkonstruktion kann beispielsweise ein ringförmiges Element aufweisen, das über den Monopile geschoben wird und auf dem Monopile in Axialrichtung des Monopiles gleiten kann. Die Stützkonstruktion kann zu diesem Zweck auch ein Führungsrohr aufweisen, das über den Monopile geschoben werden kann.

Ein auf dem Monopile aufgeschobenes Führungsrohr kann im installierten Zustand nach oben über den Monopile herausragen und den Turm einer Windenergieanlage tragen. In diesem Fall würden die Gewichtskräfte der WEA im Wesentlichen durch die Stützkonstruktion getragen. Der Monopile kann allerdings mit dem Führungsrohr auch derart fest verbunden sein, dass er auch vertikal durch das Führungsrohr auf ihn übertragende Kräfte, also Gewichtskräfte der WEA, teilweise übernimmt und in die Gründung einleitet. Das Führungsrohr kann an seinem oberen Ende eine horizontale Plattform und/oder einen Flansch aufweisen, auf dem ein Turm einer WEA befestigt sein oder werden kann.

Nimmt der Monopile keine vertikalen Kräfte auf, so kann er die Stützkonstruktion in jedem Fall bei lateralen, horizontal wirkenden Kräften und auf die WEA wirkenden Kippmomenten stützen.

Der Monopile kann auch mit einer Plattform, mit der das Führungsrohr oder allgemein die Stützkonstruktion verbunden ist, oder mit einem Flansch des Führungsrohrs, unmittelbar verbunden sein und dann beispielsweise über die Plattform oder den Flansch horizontal auf die WEA wirkende Kräfte und/oder Gewichtskräfte der WEA mit aufnehmen.

Der Monopile kann beispielsweise durch eine Öffnung in einer solchen Plattform oder einem Flansch hindurchragen und in der Öffnung fixiert sein. Damit kann die Kopplung des Führungsrohrs mit dem Monopile an verschiedene Gründungsstufen der Stützkonstruktion und des Monopile angepasst werden.

Der Monopile kann in dem Führungsrohr in dessen Längsrichtung auch beweglich bleiben, sodass er ausschließlich laterale Kräfte von der Stützkonstruktion aufnimmt.

Letztlich kann auch der Monopile nach oben über das Führungsrohr / die Stützkonstruktion hinausragen und die vertikalen Kräfte der WEA allein tragen, indem er allein den Turm der WEA trägt. In diesem Fall stützt die Stützkonstruktion den Monopile bei lateralen Belastungen.

Die Stützkonstruktion wird mittels eines oder mehrerer Suction-Buckets (Saugzylinder) am Meeresboden gegründet, indem durch die Suction-Buckets hindurch eine Fluidströmung erzeugt wird. Suction-Buckets sind bei der Gründung von Tragstrukturen am Meeresboden grundsätzlich bekannt. Beispielsweise kann die hier verwendete Stützkonstruktion ein, zwei, drei oder vier Stützbeine aufweisen, an deren Enden jeweils Suction-Buckets vorgesehen sind, die beim Aufsetzen auf den Meeresboden zunächst glockenartig aufsetzen. Darauf kann durch Ventile der einzelnen Suction-Buckets Fluid, insbesondere eingedrungenes Meerwasser, nach oben abgesaugt werden, wobei gleichzeitig dort, wo die Suction-Buckets auf dem Meeresboden aufliegen, Flüssigkeit nachgesaugt wird, so dass die Suction-Buckets sich in den Meeresboden einsaugen. Durch eine Regelungseinrichtung, die die Pumpleistung an den einzelnen Suction-Buckets steuert, kann die Neigung der Stützkonstruktion insgesamt so gesteuert werden, so dass eine vertikale Eindringung in den Meeresgrund hinein erzeugt wird. Die Führung der Stützkonstruktion durch den Monopile erweist sich bei dieser Gründungsmethode als sehr vorteilhaft.

In einem weiteren Schritt wird vorgesehen, dass nach der Gründung der Stützkonstruktion am Meeresboden diese mit dem Monopile mechanisch, insbesondere kraftschlüssig und/oder stoffschlüssig und/oder formschlüssig verbunden wird, weiter insbesondere, indem ein Zwischenraum zwischen der äußeren Umfangsfläche des Monopiles und einem diesen umgebenden Führungsrohr der Stützkonstruktion vergossen wird. Durch die Verbindung der Stützkonstruktion mit dem Monopile wird über die Führungsfunktion bei der Installation hinaus eine Lastteilung der später zu tragenden Lasten der Windenergieanlage zwischen der Stützkonstruktion und dem Monopile erreicht. Dabei sind verschiedene Arten der Verbindung denkbar, die je nach den Erfordernissen steifer oder weniger steif ausgeführt werden können.

Soll beispielsweise der Großteil der Last durch die Stützkonstruktion abgefangen werden und diese sich nur bei Extrembelastungen an dem Monopile abstützen, so kann eine relativ elastische Verbindung zwischen dem Monopile und der Stützkonstruktion vorgesehen sein. Soll die Last im Wesentlichen gleichmäßig zwischen der Stützkonstruktion und dem Monopile verteilt werden, so ist eine eher steife Verbindung zwischen den beiden Elementen sinnvoll.

Eine vorteilhafte Implementierung der Verbindung kann durch den Verguss des Zwischenraums zwischen dem Monopile und einem Führungsrohr der Stützkonstruktion erreicht werden. Dieser Verguss kann durch einen Vergusswerkstoff in Form eines Kunststoffs oder beispielsweise eines Zements stattfinden. Andere Materialien sind ebenfalls denkbar. Eine Verbindung kann jedoch auch durch Klemmeinrichtungen zwischen der Stützkonstruktion und dem Monopile hergestellt werden. Auch Schweißen oder Kleben ist als Fügemethode denkbar.

Es ist auch denkbar, dass in den Spalt zwischen dem Führungsrohr und dem Monopile in ersten Bereichen ein erster Stoff oder Körper aus einem ersten Stoff eingebracht werden kann, wobei der Stoff oder die Körper den Spalt bereichsweise völlig ausfüllen. In zweiten Bereichen kann der Spalt durch Einbringen eines zweiten Stoffes oder Körpers aus dem zweiten Stoff nur teilweise gefüllt werden/sein, sodass in den zweiten Bereichen ein Restspalt verbleibt. Der erste Stoff wird weicher/nachgiebiger/elastischer gewählt als der zweite Stoff. Dadurch wird eine dynamisch Dämpfung geschaffen, die bei geringen Auslenkungen eine schwache Kopplung zwischen dem Monopile und der Stützkonstruktion ausbildet und bei höheren Auslenkungen eine stärkere Kopplung.

Es können insbesondere härtere Körper aus dem zweiten Stoff/Material in eine Gussschicht aus dem ersten Material eingebettet sein/werden.

Bei dem erfindungsgemäßen Verfahren ist zudem vorgesehen, dass in einem ersten Vorbereitungsschritt vor dem ersten Aufbauschritt ein Aufbau einer Windenergieanlage auf dem Monopile zurückgebaut wird. Das Verfahren zur Herstellung eines Gründungssystems ist in diesem Fall mit dem vorherigen Rückbau einer bestehenden Windenergieanlage verbunden und stellt einen Teil eines Verfahrens zum Refurbishment bzw. zur Instandsetzung und teilweisen Neuerstellung einer Windenergieanlage dar.

Die Erfindung bezieht sich außer auf ein Verfahren der oben genannten Art auch auf eine Gründungseinrichtgung für eine Offshore-Windenergieanlage mit einem Monopile, der mittels einer Pfahlgründung im Meeresboden gegründet ist, sowie mit einer auf den Monopile aufgeschobenen Stützkonstruktion, die unabhängig von dem Monopile am Meeresboden gegründet ist, wobei eine Führungseinrichtung gegenüber dem Monopile begrenzt ohne eine Verbindung beweglich ist und wobei von einer bestimmten Auslenkung an eine starre Verbindung zwischen dem Monopile und der Führungseinrichtung gewährleistet ist, dadurch, dass am inneren Umfang der Führungseinrichtung oder am äußeren Umfang des Monopiles Abstandshalter angeordnet sind, die den Abstand zwischen dem Monopile und der Führungseinrichtung teilweise überbrücken. Die Stützkonstruktion kann mit dem Monopile mechanisch verbunden sein. Die Stützkonstruktion ist mittels eines oder mehrerer Stützbeine, die auf den Meeresgrund stoßen, in diesem gegründet. Dabei sind die Enden der Stützbeine oder Füße mittels Suction-Becktes im Meeresboden gegründet. In einer von den Ansprüchen nicht umfassten Variante können die Enden der Stützbeine oder Füße der Stützkonstruktion beispielsweise einzeln mit Pfahlgründungen im Meeresboden gegründet werden. Auch andere Arten der Gründung einzelner Füße der Stützkonstruktion am Meeresboden sind denkbar.

Es kann somit, wie oben erwähnt, vorgesehen sein, dass die Stützkonstruktion wenigstens ein Führungsrohr aufweist, dessen Innendurchmesser größer ist als der Außendurchmesser des Monopiles, und dass der Zwischenraum zwischen dem Monopile und dem Führungsrohr wenigstens teilweise mit einem Gusswerkstoff vergossen ist.

Die Verbindung der Stützkonstruktion mit dem Monopile kann jedoch außer durch einen Verguss auch durch eine Schraubverbindung hergestellt werden, indem beispielsweise der Monopile und ein Führungsrohr der Stützeinrichtung an mehreren Stellen ihres Umfangs miteinander durch radial verlaufende Schrauben verschraubt werden. Auch das Eintreiben von Klemmkörpern in den Zwischenraum zwischen einem Führungsrohr der Stützkonstruktion und dem Monopile ist als Verbindungsmethode denkbar.

Es können auch Anschlagelemente in den Zwischenraum zwischen dem Monopile und einem Führungsrohr eingebracht werden, die den Zwischenraum nur teilweise überbrücken, so dass der Monopile und das Führungsrohr um einen bestimmten Betrag frei gegeneinander bewegt werden können und bei einer weitergehenden Bewegung verbunden sind.

Zudem kann auch vorgesehen sein, dass die Stützkonstruktion wenigstens ein Führungsrohr aufweist, dessen Innendurchmesser größer ist als der Außendurchmesser des Monopiles, und dass das Führungsrohr an dem Monopile durch ein oder mehrere Klemmelemente kraftschlüssig befestigt ist, wobei die Klemmelemente insbesondere den Zwischenraum zwischen dem Monopile und dem Führungsrohr überbrücken oder den Durchmesser des Führungsrohrs verringern. Somit ist beispielsweise auch eine Klemmschelle denkbar, die den Durchmesser des Führungsrohrs so weit verringert, dass es auf den Monopile aufgeklemmt werden kann.

Ein von den Ansprüchen nicht umfasstes und vorliegend illustratives Beispiel bezieht sich auf eine Stützkonstruktion für das Gründungssystem einer Windenergieanlage mit wenigstens einer Führungseinrichtung, die in ihrer Axialrichtung auf einen Monopile aufschiebbar ist, sowie einem oder mehreren mit der Führungseinrichtung verbundenen Stützbeinen, die in Bezug auf die Axialrichtung der Stützkonstruktion, die nach der Montage der Axialrichtung des Monopiles entspricht, radial außen an diesem angeordnet sind, wobei die Stützbeine insbesondere Suction-Buckets aufweisen oder jeweils für eine Pfahlgründung vorbereitet sind. Die Stützkonstruktion kann somit beispielsweise als Zweibein, als Tripod oder als Quadripod ausgebildet sein.

Der Turm der zu installierenden Windenergieanlage kann beispielsweise unmittelbar auf die Stützkonstruktion aufgesetzt und von diesem getragen werden. Die Stützkonstruktion kann sich andererseits an dem Monopile abstützen. Es ist jedoch auch denkbar, dass der Turm der Windenergieanlage auf den Monopile aufgesetzt wird und der Monopile sich seinerseits an der Stützkonstruktion abstützt.

Bei der Stützkonstruktion kann außerdem vorgesehen sein, dass die Führungseinrichtung als Führungsrohr ausgeführt ist, insbesondere mit einer Dichtungseinrichtung, die dazu eingerichtet ist, einen ringförmigen Zwischenraum zwischen dem Führungsrohr und dem Monopile wenigstens abschnittsweise abzudichten, um den Verguss des Zwischenraums mit einem Verbindungswerkstoff zu ermöglichen. Da ein Verguss zwischen der Führungseinrichtung der Stützkonstruktion und dem Monopile nach der Installation unterhalb des Meereswasserspiegels erfolgen soll, ist es sinnvoll, eine Dichtungseinrichtung mit in die Stützkonstruktion zu integrieren, die den Zwischenraum zwischen der Stützkonstruktion und dem Monopile beim Gussvorgang wenigstens teilweise abdichtet, so dass der Gusswerkstoff zumindest zu einer Seite beim Einbringen nicht ablaufen kann. Die Stützkonstruktion kann auch mehrere Dichtlippen aufweisen, die jeweils an dem Monopile gleiten und zwischen den Dichtlippen somit einen geschlossenen Ringraum schaffen, der nach der Gründung der Stützkonstruktion am Meeresboden vergossen werden kann. Es kann dann an mindestens einer Dichtlippe oder auch an einer anderen Stelle der Stützkonstruktion, beispielsweise am Umfang des Führungsrohrs, ein Ventil zur Befüllung des Ringraums mit einem Vergusswerkstoff vorgesehen sein.

Im Folgenden wird die Erfindung anhand von Ausführungsbeispielen in Figuren einer Zeichnung gezeigt und nachfolgend erläutert. Dabei zeigt
- Fig. 1: eine Offshore-Windenergieanlage, die mittels eines Monopiles gegründet ist, sowie ein Schiff mit einem Kran,
- Fig. 2: schematisch nach dem Rückbau der bestehenden Windenergieanlage stehen gebliebene Monopiles,
- Fig. 3: das Aufsetzen einer Stützkonstruktion auf einen Monopile mittels eines Schiffskrans,
- Fig. 4: das Aufsetzen einer Stützkonstruktion am Meeresboden,
- Fig. 5: die Installation einer Stützkonstruktion mittels Suction-Buckets am Meeresboden durch Absaugen,
- Fig. 6: das Aufsetzen eines Turms einer Windenergieanlage auf eine Stützkonstruktion,
- Fig. 7: in vergrößerter Darstellung eine gegründete Stützkonstruktion,
- Fig. 8: eine Offshore-Windenergieanlage mit einem Monopile und einer Stützkonstruktion in einer Frontansicht,
- Fig. 9: eine Draufsicht auf eine Anlage gemäß Figur 8,
- Fig. 10: eine Stützkonstruktion einer weiteren Bauart mit zwei Füßen, wobei die Stützkonstruktion auf einen Monopile aufgeschoben ist,
- Fig. 11: eine Windenergieanlage mit einer Stützkonstruktion wie in Figur 10 dargestellt in einer Frontansicht,
- Fig. 12: die Anlage aus Figur 11 in einer Seitenansicht,
- Fig. 13: die Gründungsstruktur bestehend aus einem Monopile und zwei Füßen einer Stützkonstruktion von oben,
- Fig. 14: eine Ansicht der Windenergieanlage aus den Figuren 11 und 12 von oben gesehen,
- Fign. 15, 16, 17, 18: jeweils Ansichten ähnlich den in den Figuren 10, 12, 13 und 14 gezeigten Ansichten für eine Stützkonstruktion mit vier Füßen,
- Fig. 19: verschiedene Verbindungsstrukturen eines Monopiles und eines Führungsrohrs im Querschnitt sowie
- Fig. 20: ein Führungsrohr mit einer Dichtlippe, auf einen Monopile aufgeschoben, vor einem Verguss.

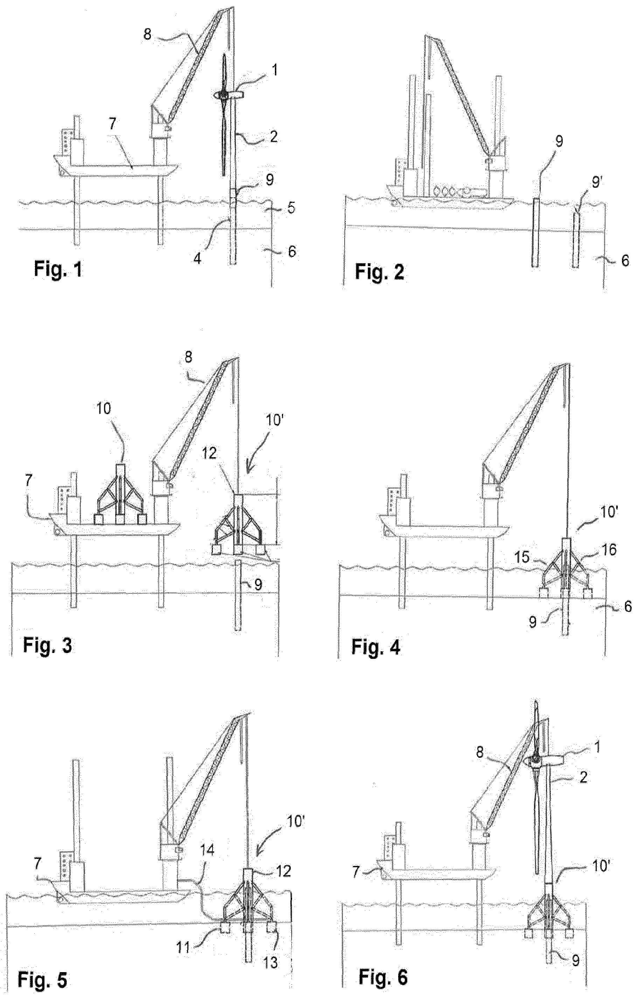

In Figur 1 ist in einer schematischen Darstellung eine Offshore-Windenergieanlage mit einer Gondel 1 dargestellt, die an einem Turm 2 befestigt ist. Der Turm 2 wird durch einen Monopile 9 getragen, der aus dem Meerwasser 5 herausragt. Ein unter Wasser liegender Teil 4 des Monopiles geht in einen in den Meeresboden 6 hineinragenden Teil über.

Arbeiten an der Offshore-Windenergieanlage werden von einem Schiff 7 aus durchgeführt, das auch nach Art einer Plattform aufgeständert werden kann und das einen Kran 8 aufweist.

Beim Rückbau der Windenergieanlage kann der Turm 2 und die Gondel 1 mittels des Krans 8 abgenommen werden, indem der Turm 2 von dem Monopile 9 durch Brennschneiden oder spanende Bearbeitung abgetrennt wird. In Figur 2 ist gezeigt, dass der Kran 8 des Schiffs 7 die zu ersetzenden Teile der Windenergieanlage auf dem Schiff ablegt und dass je nach der Art der Instandsetzung der verbleibende Teil 9, 9' des Monopiles entweder unterhalb der Wasserlinie des Meerwassers oder oberhalb der Wasserlinie endet.

Die Figur 3 zeigt ein aufgeständertes Kranschiff 7 mit einem Kran 8, wobei auf dem Kranschiff 7 eine Stützkonstruktion 10 gelagert ist. Im rechten Teil der Figur 3 ist eine Stützkonstruktion 10' dargestellt, die ein zentrales Führungsrohr 12 aufweist und die derart auf den Monopile 9 heruntergelassen wird, dass das Führungsrohr 12 auf den Monopile 9 aufgeschoben wird.

In Figur 4 ist das Verfahren in dem Verfahrensschritt dargestellt, in dem die Stützkonstruktion 10' auf dem Meeresboden 6 aufsetzt.

In Figur 5 ist dargestellt, dass die einzelnen Suction-Buckets 11, 13, von denen die dargestellte Stützkonstruktion vier aufweist, mittels einer Absaugleitung 14 mit einer Pumpe an Bord des Schiffes 7 verbunden sind. Über die Absaugleitung 14 wird Flüssigkeit am oberen Ende der Suction-Buckets aus diesen herausgepumpt, so dass im Bereich der Berührung der Suction-Buckets mit dem Meeresgrund Flüssigkeit nachströmt, so dass die Suction-Buckets im Zuge des Fluidtransports in den Meeresgrund einsinken und die Stützkonstruktion 10' im Meeresgrund gegründet wird.

An Bord des Schiffes 7 ist eine Steuerung vorgesehen, die die Intensität, mit der aus den einzelnen Suction-Buckets Flüssigkeit abgesaugt wird, so steuert, dass die Stützkonstruktion 10' vertikal in den Meeresgrund eingelassen werden kann. Unter der Intensität der Absaugung kann dabei entweder eine Druckregelung beim Absaugvorgang oder auch eine Regelung von Absaugzeiten verstanden werden, sofern an den einzelnen Suction-Buckets intervallartig Flüssigkeit abgesaugt wird.

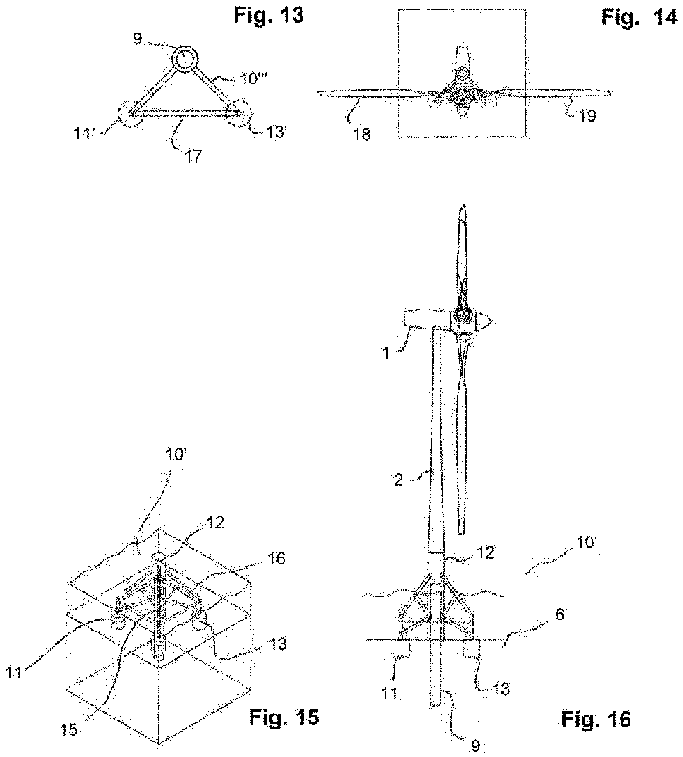

Die in den Figuren 3 bis 6 dargestellte Stützkonstruktion ist etwas detaillierter in den Figuren 15 bis 18 dargestellt.

Figur 15 zeigt in einer perspektivischen Ansicht den sogenannten Mono-Tetrabucket in Form einer Stützkonstruktion mit einem Führungsrohr 12, das zentral zwischen vier Stützbeinen 15, 16 angeordnet ist, wobei jedes der Stützbeine an seinem unteren Ende einen Suction-Bucket 11, 13 trägt.

In Figur 16 ist ein Mono-Tetrabucket nach der Installation am Meeresgrund 6 gezeigt, wobei die Suction-Buckets 11, 13 vollständig in den Meeresgrund eingesunken sind und wobei das Führungsrohr 12 über einen Monopile 9 gestülpt worden ist. Auf die Stützkonstruktion 10' sind ein Turm 2 einer Windenergieanlage sowie eine Gondel 1 mit Rotorblättern montiert.

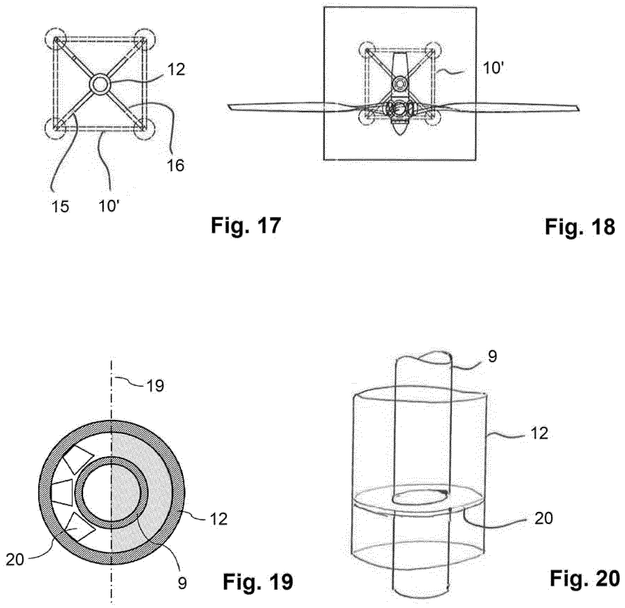

Die Stützkonstruktion 10' und eine Windenergieanlage mit einer solchen Stützkonstruktion sind in einer Draufsicht in Figur 17 und zusammen mit einer aufgesetzten Windenergieanlage in Figur 18 dargestellt. An dem Führungsrohr 12 ist bei der Stützkonstruktion 10' zu vier Seiten hin jeweils ein Stützbein 15, 16 befestigt, wobei am unteren Ende jedes Stützbeins 15, 16 jeweils ein Suction-Bucket 11, 13 befestigt ist. Die einzelnen Stützbeine 15, 16 sind fest mit dem Führungsrohr 12 an einer oder mehreren Stellen verbunden. Dabei kann auch ein fachwerkartiges Tragwerk zum Abstützen der Beine 15, 16 an dem Führungsrohr 12 vorgesehen sein.

In Figur 17 ist ersichtlich, dass das Führungsrohr 12 symmetrisch in der Mitte zwischen den Stützbeinen 15, 16 liegt. Das Führungsrohr 12 oder der nach der Installation in diesem befindliche Monopile trägt später den Turm der Windenergieanlage. Eine symmetrische Verteilung der Beine 15, 16 und Suction-Buckets um das Führungsrohr 12 herum gewährleistet eine gleich gute Abstützung bei Belastungen aus allen Himmelsrichtungen. Das Führungsrohr 12 kann jedoch gegenüber der Mitte zwischen den Stützbeinen 15, 16 ein Stück weit versetzt werden, soweit absehbar ist, dass aus einer Himmelsrichtung erhebliche stärkere Belastungen auf die Windenergieanlage wirken als aus den übrigen Richtungen.

Anstelle des Führungsrohrs 12 kann auch eine andere Struktur gewählt werden, die eine Abstützung der Stützkonstruktion 10, 10',10", 10‴ an einem Monopile erlaubt. Eine solche Struktur kann beispielsweise mehrere ringförmige und in vertikaler Richtung gegeneinander beabstandete Elemente aufweisen. Eine andere Alternative kann in jeder Art einer Führungsschiene liegen.

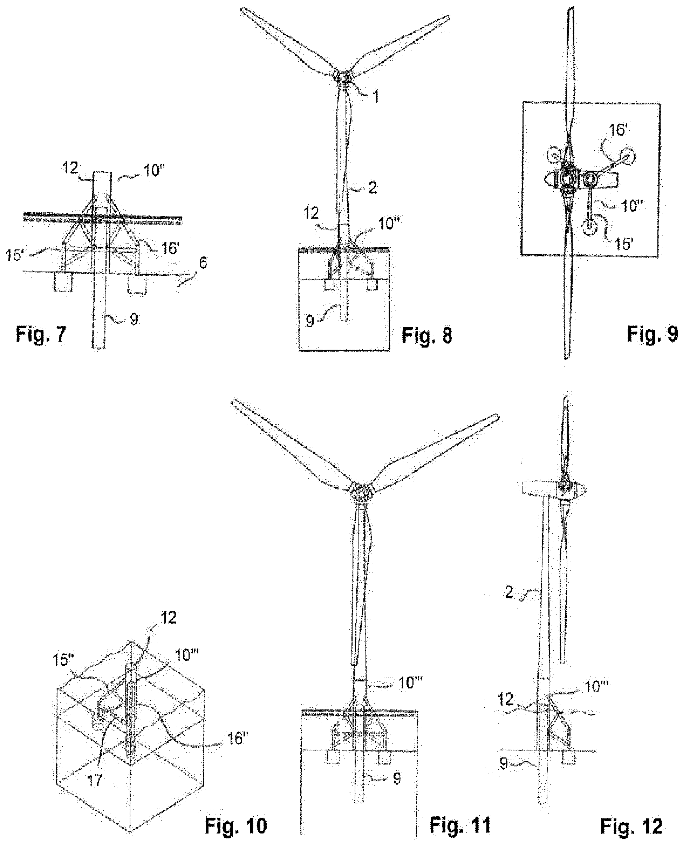

Die Figuren 7, 8 und 9 zeigen als Stützkonstruktion jeweils einen Mono-Tribucket 10" mit einem zentralen Führungsrohr 12 und jeweils drei Stützbeinen 15', 16'. Wie bei der in den vorangegangenen Figuren geschilderten Stützkonstruktion trägt jedes der Stützbeine 15', 16' an seinem unteren Ende einen Suction-Bucket.

Die Befestigung der Stützkonstruktion 10" am Meeresgrund kann, ebenso wie die Befestigung der Stützkonstruktion 10', außer durch Suction-Buckets auch durch Pfahlgründungen der einzelnen Füße / unteren Enden der Stützbeine 15, 15', 16, 16' erfolgen. Auch alle anderen bekannten Methoden zur Gründung am Meeresboden sind für die einzelnen Stützbeine denkbar.

In Figur 7 ist der Zustand dargestellt, bei dem die Stützkonstruktion 10" über einen Monopile 9 aufgeschoben und bereits im Meeresgrund 6 gegründet ist.

Figur 8 zeigt die Windenergieanlage in einer Frontansicht, wobei auf das Führungsrohr 12 bereits ein Turm 2 aufgesetzt ist. Der Turm 2 trägt seinerseits eine Gondel 1 mit Rotorblättern.

Figur 9 zeigt den Aufbau aus Figur 8 in einer Ansicht von oben, so dass die drei Beine 15', 16' des Tribuckets gut erkennbar sind. Diese Beine bilden eine Abstützung der Stützkonstruktion, die sich mit der Abstützwirkung des Monopiles 9 ergänzt.

In den Figuren 10, 11, 12 ist jeweils eine Stützkonstruktion 10‴ in Form eines Mono-Dibuckets gezeigt. Diese Stützkonstruktion weist ein zentrales Führungsrohr 12 oder anderes Führungselement auf, das mittels zweier Stützbeine 15", 16" am Meeresboden abgestützt ist. Die Stützbeine 15", 16" sind wie bei den oben beschriebenen übrigen Ausführungsformen jeweils mittels Suction-Buckets am Meeresboden gegründet. Die Stützkonstruktion 10‴ ist derart eingerichtet, dass sie nach der Gründung im Meeresboden aus dem Wasser herausragt, d. h. oberhalb der Meeresoberfläche über diese hinausragt.

In Figur 11 ist eine Frontansicht einer Windenergieanlage gezeigt, die durch einen Mono-Dibucket gestützt ist, und in Figur 12 ist eine Seitenansicht gezeigt, aus der deutlich wird, dass die Stützbeine 15", 16" gegenüber dem Führungsrohr 12 unsymmetrisch angeordnet sind, in der Weise, dass sie sich von dem Führungsrohr und dem später auf dieses aufgesetzten Turm 2 im Wesentlichen in die Richtung erstrecken, aus der im Betrieb die höchste Belastung auf die Windenergieanlage wirkt. Bei dieser Ausführungsform wird die Stützkonstruktion 10‴ wesentlich durch den Monopile 9 gestützt, auf den es aufgesetzt wird. Zumindest für diesen Fall ist eine starre Verbindung zwischen dem Monopile und dem Führungsrohr 12 beziehungsweise zwischen dem Monopile und der Stützkonstruktion 10‴ sinnvoll.

In Figur 13 ist die Stützkonstruktion 10‴ zusammen mit dem Monopile 9 in einer Draufsicht dargestellt. Aus Figur 13 wird deutlich, dass bei dieser Aufstellungsart der Monopile 9 und die Füße / Suction-Buckets 11', 13' an den Ecken eines gleichschenkligen oder sogar gleichseitigen Dreiecks verteilt sind. Zudem ist aus Figur 13 ersichtlich, dass die Stützbeine 15", 16" auch untereinander durch Streben 17 verbunden sein können.

In Figur 14 ist ein Aufbau einer Windenergieanlage auf einem Mono-Dibucket, wie er in Figur 13 dargestellt ist, von oben betrachtet dargestellt.

In Figur 19 ist in einer vergrößerten Ansicht die Verbindung zwischen einem Führungsrohr 12 und einem Monopile 9 in einem Querschnitt dargestellt. Auf der rechten Seite der gestrichelten Linie 19 ist die Variante eines Vollvergusses zwischen dem Monopile 9 und dem Führungsrohr 12, beispielsweise mittels eines Zements, dargestellt.

Auf der linken Seite der gestrichelten Linie 19 ist eine Variante dargestellt, bei der das Führungsrohr 12 gegenüber dem Monopile 9 begrenzt ohne eine Verbindung beweglich ist und bei der von einer bestimmten Auslenkung an eine starre Verbindung zwischen dem Monopile 9 und dem Führungsrohr 12 gewährleistet ist. Dies geschieht dadurch, dass am inneren Umfang des Führungsrohrs 12 oder am äußeren Umfang des Monopiles 9 Abstandshalter 20 angeordnet sind, die den Abstand zwischen dem Monopile und dem Führungsrohr teilweise überbrücken. Die Abstandshalter 20 können als weitere Alternative auch in einen Vergusswerkstoff zwischen dem Führungsrohr und dem Monopile eingebettet sein, der aus einem Material besteht, das nachgiebiger ist als das Material der Abstandshalter 20.

Durch das erfindungsgemäße Verfahren ebenso wie durch das erfindungsgemäße Gründungssystem ist sowohl der Aufbau, die Instandsetzung als auch das Repowering von Offshore-Windenergieanlagen in Bezug auf ihre Gründungssysteme erleichtert und verbessert.

## Patentansprüche

1. Verfahren zur teilweisen Neuerstellung eines Gründungssystems (9, 10,10', 10", 10"') mit einem Einzelpfahl (9, 9') für eine Offshore-Windenergieanlage (1, 2), bei dem in einem ersten Vorbereitungsschritt vor dem ersten Aufbauschritt ein Aufbau einer Windenergieanlage auf dem Einzelpfahl (9, 9') zurückgebaut wird und bei dem in einem ersten Aufbauschritt auf den im Meeresboden (6) gegründeten Einzelpfahl (9, 9') eine Stützkonstruktion (10, 10', 10", 10"') mit wenigstens einer Führungseinrichtung (12), die in ihrer Axialrichtung auf einen Einzelpfahl (9, 9') aufschiebbar ist, sowie einem oder mehreren mit der Führungseinrichtung verbundenen Stützbeinen (15, 15', 16, 16'), aufgeschoben wird und in einem zweiten Aufbauschritt die Stützkonstruktion (10, 10', 10", 10"') am Meeresboden (6) gegründet wird, wobei die Stützkonstruktion (10, 10', 10", 10"') mittels eines oder mehrerer Saugzylinder am Meeresboden (6) gegründet wird, indem durch die Saugzylinder (11, 11', 13, 13') hindurch eine Fluidströmung erzeugt wird, wobei bevorzugt am inneren Umfang der Führungseinrichtung (12) oder am äußeren Umfang des Einzelpfahles (9, 9') Abstandshalter (20) angeordnet sind, die den Abstand zwischen dem Einzelpfahl und der Führungseinrichtung teilweise überbrücken.

2. Verfahren nach Anspruch 1, **dadurch gekennzeichnet, dass** die Stützkonstruktion beim Aufschieben auf den Einzelpfahl (9, 9') an diesem mechanisch geführt wird.

3. Verfahren nach einem der Ansprüche 1 oder 2, **dadurch gekennzeichnet, dass** nach der Gründung der Stützkonstruktion (10, 10', 10", 10‴) am Meeresboden (6) diese mit dem Einzelpfahl (9, 9') mechanisch, insbesondere kraftschlüssig und/oder stoffschlüssig und/oder formschlüssig verbunden wird, weiter insbesondere, indem ein Zwischenraum zwischen der äußeren Umfangsfläche des Einzelpfahls (9, 9') und einem diesen umgebenden Führungsrohr (12) der Stützkonstruktion vergossen wird.

4. Teilweise neue erstellte Gründungseinrichtung für eine Offshore-Windenergieanlage (1, 2) mit einem Einzelpfahl (9, 9'), der mittels einer Pfahlgründung im Meeresboden (6) gegründet ist, sowie mit einer auf den Einzelpfahl aufgeschobenen und eines oder mehrere Stützbeine (15, 15', 16, 16") umfassenden Stützkonstruktion (10, 10', 10", 10"') mit wenigstens einer Führungseinrichtung (12), wobei die Stützkonstruktion (10, 10', 10", 10"') unabhängig von dem Einzelpfahl mittels eines oder mehrerer Saugzylinder (11, 11', 13, 13') an den Enden der Stützbeine am Meeresboden gegründet ist, wobei die Führungseinrichtung (12) gegenüber dem Einzelpfahl begrenzt ohne eine Verbindung beweglich ist und wobei von einer bestimmten Auslenkung an eine starre Verbindung zwischen dem Einzelpfahl und der Führungseinrichtung gewährleistet ist, wobei bevorzugt am inneren Umfang der Führungseinrichtung (12) oder am äußeren Umfang des Einzelpfahles (9, 9') Abstandshalter (20) angeordnet sind, die den Abstand zwischen dem Einzelpfahl und der Führungseinrichtung teilweise überbrücken.

5. Gründungseinrichtung nach Anspruch 4, **dadurch gekennzeichnet, dass** die Stützkonstruktion (10, 10', 10", 10‴) wenigstens ein Führungsrohr (12) aufweist, dessen Innendurchmesser größer ist als der Außendurchmesser des Einzelpfahls (9, 9'), und dass der Zwischenraum zwischen dem Einzelpfahl und dem Führungsrohr wenigstens teilweise mit einem Gusswerkstoff vergossen ist.

## Claims

1. A method to partially rebuild a foundation system (9, 10,10', 10', 10") with a monopile (9, 9') for an offshore wind turbine (1,2), in which prior to the first construction step, a wind turbine erected on the monopile (9, 9') is dismantled in a first preparatory step, and in which a support structure (10, 10', 10', 10‴) with at least one guide device (12) that can be pushed onto a monopile (9, 9') in its axial direction, as well as one or more support legs (15, 15', 16, 16') being connected to the guide device is erected on the monopile (9, 9') which is founded in the seabed (6) in a first construction step, , and in a second construction step, the support structure (10, 10', 10", 10") is founded in the seabed (6) by suction cylinders by generating a fluid flow through the suction cylinders (11, 11', 13, 13'), whereby spacer elements (20) are preferably arranged on the inner circumference of the guide device (12) or on the outer circumference of the monopile (9, 9'), which partially bridge the distance between the monopile and the guide device.

2. A method according to claim 1, **characterised in that** the support structure is mechanically guided on the monopile (9, 9') when pushed onto it.

3. A method according to one of claims 1 or 2, **characterised in that**, after the support structure (10,10', 10", 10") has been founded in the seabed (6), it is mechanically connected to the monopile (9, 9'), in particular via a force-fit and/or material-fit and/or form-fit connection, furthermore in particular by filling an intermediate space between the outer circumferential surface of the monopile (9, 9') and a guide tube (12) of the support structure that surrounds it.

4. A partially newly constructed foundation device for an offshore wind turbine (1,2) with a monopile (9, 9') that is founded in the seabed (6) via a pile foundation, as well as a support structure (10, 10', 10', 10‴) comprising one or more support legs (15, 15', 16, 16") comprising at least one guide device (12), the support structure (10, 10', 10", 10‴) being grounded into the seabed independently of the monopile via one or more suction cylinders (11, 11', 13, 13') at the ends of the support legs, the guide device (12) being movable relative to the monopile in a limited manner without a connection and a rigid connection between the monopile and the guide device is ensured from a certain deflection, spacers (20) being arranged preferably on the inner circumference of the guide device (12) or on the outer circumference of the monopile (9, 9'), which partially bridge the distance between the monopile and the guide device.

5. Foundation device according to claim 4, **characterised in that** the support structure (10, 10', 10", 10") has at least one guide tube (12) whose internal diameter is larger than the external diameter of the monopile (9, 9'), and that the intermediate space between the monopile and the guide tube is at least partially filled with a casting material.

## Revendications

1. Procédé de reconstruction partielle d'un système de fondation (9, 10, 10', 10", 10‴) présentant un monopieu (9, 9') pour une éolienne offshore (1, 2), dans lequel, dans une première étape de préparation précédant la première étape de construction, une structure d'éolienne se trouvant sur le monopieu (9, 9') est démantelée et dans lequel, dans une première étape de construction, une structure de support (10, 10', 10", 10‴) comprenant au moins un dispositif de guidage (12), pouvant être emmanché dans sa direction axiale sur le monopieu (9, 9'), et un ou plusieurs pied(s) de support (15, 15', 16, 16') relié(s) au dispositif de guidage est emmanchée sur le monopieu (9, 9') ancré dans le fond marin (6), et, dans une seconde étape de construction, la structure de support (10, 10', 10", 10‴) est ancrée sur le fond marin (6), dans lequel la structure de support (10, 10', 10", 10‴) est ancrée sur le fond marin (6) au moyen d'un ou plusieurs vérin(s) de succion en générant une circulation de fluide à travers les vérins de succion (11, 11', 13, 13'), dans lequel des entretoises (20) comblant partiellement la distance entre le monopieu et le dispositif de guidage sont agencées de manière préférée sur la circonférence intérieure du dispositif de guidage (12) ou sur la circonférence extérieure du monopieu (9, 9').

2. Procédé selon la revendication 1, **caractérisé en ce que** la structure de support est guidée mécaniquement sur le monopieu (9, 9') lorsqu'elle est emmanchée sur ledit monopieu.

3. Procédé selon la revendication 1 ou 2, **caractérisé en ce que**, après l'ancrage de la structure de support (10, 10', 10", 10",) sur le fond marin (6), ladite structure de support est reliée au monopieu (9, 9') de manière mécanique, en particulier avec verrouillage par complémentarité de force et/ou de matière et/ou de forme, en particulier de manière supplémentaire en remplissant un espace intermédiaire entre la surface circonférentielle extérieure du monopieu (9, 9') et un tube de guidage (12), entourant ledit monopieu, de la structure de support.

4. Dispositif de reconstruction partielle de fondation pour une éolienne offshore (1, 2), avec un monopieu (9, 9') ancré dans le fond marin (6) au moyen d'une fondation sur pieux, et avec une structure de support (10, 10', 10", 10‴) emmanchée sur le monopieu et comprenant un ou plusieurs pied(s) de support (15, 15', 16, 16"), avec au moins un dispositif de guidage (12), dans lequel la structure de support (10, 10', 10", 10‴) est ancrée sur le fond marin indépendamment du monopieu au moyen d'un ou plusieurs vérin(s) d'aspiration (11, 11', 13, 13') situé(s) aux extrémités des pieds de support, dans lequel le dispositif de guidage (12) est mobile, sans liaison et de manière limitée, par rapport au monopieu et dans lequel une liaison rigide entre le monopieu et le dispositif de guidage est assurée à partir d'une certaine déflexion, dans lequel des entretoises (20) comblant partiellement la distance entre le monopieu et le dispositif de guidage sont agencées de manière préférée sur la circonférence intérieure du dispositif de guidage (12) ou sur la circonférence extérieure du monopieu (9, 9').

5. Dispositif de fondation selon la revendication 4, **caractérisé en ce que** la structure de support (10, 10', 10", 10",)) présente au moins un tube de guidage (12) dont le diamètre intérieur est supérieur au diamètre extérieur du monopieu (9, 9'), et **en ce que** l'espace intermédiaire entre le monopieu et le tube de guidage est au moins partiellement rempli avec un matériau coulé.
